# EUROPÄISCHE PATENTSCHRIFT

(11) **EP 3 123 545 B1**
(45) Veröffentlichungstag und Bekanntmachung des Hinweises auf die Patenterteilung: **28.04.2021**
(21) Anmeldenummer: 15713411.5
(22) Anmeldetag: 23.03.2015
(51) Int. Cl.: H01M 8/0276, H01M 8/0284, H01M 8/0247, H01M 8/1018, H01M 8/242, H01M 8/2483

(54) **DICHTUNGSANORDNUNG FÜR EINE ELEKTROCHEMISCHE VORRICHTUNG**
SEALING ARRANGEMENT FOR AN ELECTROCHEMICAL DEVICE
ENSEMBLE D'ÉTANCHÉITÉ POUR DISPOSITIF ÉLECTROCHIMIQUE

(30) Priorität: 24.03.2014 DE 102014104016
(43) Veröffentlichungstag der Anmeldung: 01.02.2017
(73) Patentinhaber: ElringKlinger AG, 72581 Dettingen (DE)
(72) Erfinder: MAIER, Uwe, 72800 Eningen (DE); BEDNAREK, Timo, 72766 Reutlingen (DE); KRAFT, Jürgen, 72555 Metzingen (DE)
(74) Vertreter: Hoeger, Stellrecht & Partner Patentanwälte mbB
(86) Internationale Anmeldenummer: PCT/EP2015/056060
(87) Internationale Veröffentlichungsnummer: WO 2015/144620

(56) Entgegenhaltungen:
- EP-A1- 2 696 418
- DE-A1-102010 024 316
- JP-A- 2006 128 040
- JP-A- 2013 179 071
- US-A1- 2008 206 622
- US-A1- 2009 253 022

## Beschreibung

Die vorliegende Erfindung betrifft eine Dichtungsanordnung für eine elektrochemische Vorrichtung, beispielsweise für einen Brennstoffzellenstapel oder für einen Elektrolyseur.

Eine solche Dichtungsanordnung dient zum im Wesentlichen fluiddichten Abdichten eines Raums der elektrochemischen Vorrichtung, der im Betrieb der elektrochemischen Vorrichtung mit einem fluiden Medium (beispielsweise mit einem Brenngas, einem Oxidationsmittel oder einem Kühlmittel) gefüllt ist, gegenüber einem anderen Raum der elektrochemischen Vorrichtung, welcher im Betrieb der elektrochemischen Vorrichtung mit einem anderen fluiden Medium gefüllt ist, oder gegenüber einem Außenraum der elektrochemischen Vorrichtung.

Bislang bekannte Dichtungsanordnungen für eine elektrochemische Vorrichtung umfassen Folgendes:
- einen Dichtmassenwulst, welcher durch Dispensieren mittels eines Roboters auf ein Bauteil der elektrochemischen Vorrichtung aufgebracht wird;
- an ein Bauteil einer elektrochemischen Vorrichtung angespritzte Elastomerdichtraupen;
- in ein Bauteil einer elektrochemischen Vorrichtung eingeprägte Sicken; oder
- separat von anderen Bauteilen der elektrochemischen Vorrichtung hergestellte lose Dichtelemente, die zwischen Bauelemente der elektrochemischen Vorrichtung eingelegt werden.

Die bisher bekannten Dichtungsanordnungen sind entweder hinsichtlich des erforderlichen Materials und/oder hinsichtlich der erforderlichen Montageschritte zu aufwändig und somit für eine Serienfertigung nicht geeignet, oder sie erfüllen nicht die technischen Anforderungen an eine ausreichende Abdichtung bei hinreichend langer Betriebszeit der elektrochemischen Vorrichtung.

Die EP 2 696 418 A1 offenbart eine Dichtungsanordnung für eine elektrochemische Vorrichtung, die ein Tragelement und ein an dem Tragelement angeordnetes Dichtelement, welches ein Elastomermaterial umfasst, umfasst, wobei das Tragelement und/oder das Dichtelement eine sich unter Druckspannungen im verpressten Zustand variierende Höhe aufweisen.

Die US 2008/206622 A1, die JP 2013 179071 A, die JP 2006 128040 A, die DE 10 2010 024 316 A1 und die US 2009/0253022 A1 offenbaren eine Dichtungsanordnung für eine elektrochemische Vorrichtung gemäß dem Oberbegriff von Anspruch 1.

Der vorliegenden Erfindung liegt die Aufgabe zugrunde, eine Dichtungsanordnung für eine elektrochemische Vorrichtung zu schaffen, welche mit geringem Material- und Montageaufwand herstellbar und somit für eine Serienfertigung geeignet ist und zugleich eine ausreichende Dichtwirkung bei hinreichend langer Betriebszeit der elektrochemischen Vorrichtung aufweist.

Diese Aufgabe wird durch eine Dichtungsanordnung für eine elektrochemische Vorrichtung nach Anspruch 1 gelöst.

Um eine ausreichende Dichtkraft an den abdichtenden Flächen der Dichtungsanordnung bereitzustellen, werden die Bauteile der elektrochemischen Vorrichtung mittels einer Spannvorrichtung mit einer Spannkraft beaufschlagt.

Diese Spannkraft variiert zwischen verschiedenen Bereichen der elektrochemischen Vorrichtung. Insbesondere kann die Spannkraft mit wachsendem Abstand von Spannelementen, mittels welchen die Spannkraft erzeugt wird, abnehmen.

Ferner kann auch die für eine ausreichende Abdichtung an den Dichtflächen der Dichtungsanordnung erforderliche Dichtkraft längs der Dichtungsanordnung variieren.

Der vorliegenden Erfindung liegt das Konzept zugrunde, die inhomogene Pressungs- oder Spannkraftverteilung in der elektrochemischen Vorrichtung durch eine Höhenprofilierung und/oder durch eine Breitenprofilierung des Tragelements und/oder durch eine Höhenprofilierung und/oder durch eine Breitenprofilierung des Dichtelements der Dichtungsanordnung so anzupassen, insbesondere zu kompensieren, dass an jeder Stelle der Dichtungsanordnung eine ausreichende Dichtkraft zur Verfügung steht.

Auf diese Weise kann die Menge des für die Bildung des Dichtelements benötigten Elastomermaterials an den jeweils lokal erforderlichen Bedarf angepasst werden, was die Gesamtmenge des benötigten Elastomermaterials reduziert.

Bei einer bevorzugten Ausgestaltung der Erfindung ist vorgesehen, dass das Tragelement und/oder das Dichtelement bereits in einem entspannten Ausgangszustand vor dem Verspannen der Bauteile der elektrochemischen Vorrichtung eine in der Längsrichtung der Dichtungsanordnung variierende Höhe und/oder eine in der Längsrichtung der Dichtungsanordnung variierende Breite aufweist.

Alternativ hierzu kann vorgesehen sein, dass das Tragelement und/oder das Dichtelement erst im montierten und/oder verspannten Zustand der Dichtungsanordnung eine in der Längsrichtung der Dichtungsanordnung variierende Höhe und/oder eine in der Längsrichtung der Dichtungsanordnung variierende Breite aufweist.

Durch das Elastomermaterial des Dichtelements weist das Dichtelement eine elastische Verformbarkeit auf, welche es ermöglicht, dynamische Schwankungen der Höhe des von der Dichtungsanordnung abzudichtenden Dichtspalts im Betrieb der elektrochemischen Vorrichtung durch die Elastizität des Dichtelements sicher und dauerhaft auszugleichen.

Solche dynamischen Dichtspaltschwankungen können beispielsweise durch Temperaturschwankungen oder Feuchteschwankungen im Betrieb der elektrochemischen Vorrichtung auftreten, welche beispielsweise zu einem Setzvorgang oder einem Quellvorgang einer Membran-Elektroden-Anordnung einer elektrochemischen Einheit der elektrochemischen Vorrichtung führen können.

Das Dichtelement der Dichtungsanordnung ist so ausgebildet, das es längs der Längsrichtung der Dichtungsanordnung an jeder Stelle eine ausreichende Höhe und eine ausreichende elastische Nachgiebigkeit aufweist.

Vorzugsweise ist das Dichtelement im Wesentlichen vollständig aus einem Elastomermaterial gebildet.

Das Elastomermaterial des Dichtelements kann beispielsweise einen Gummi oder ein thermoplastisches Elastomer (TPE) umfassen.

Das Tragelement der Dichtungsanordnung umfasst vorzugsweise ein metallisches Material und kann vorzugsweise im Wesentlichen vollständig aus einem metallischen Material gebildet sein.

Ein solches metallisches Material kann beispielsweise ein Edelstahlmaterial sein.

Das Tragelement kann in seinem dem Dichtelement benachbarten Bereich im Wesentlichen eben ausgebildet sein.

Bei einer besonderen Ausgestaltung der Erfindung ist vorgesehen, dass das Tragelement, insbesondere bei der Erstmontage der elektrochemischen Vorrichtung und/oder bei der ersten Inbetriebnahme der elektrochemischen Vorrichtung, plastisch verformbar ist.

Durch die plastische Verformbarkeit des Tragelements kann ein Ausgleich der Toleranzen von Bauteilen der elektrochemischen Vorrichtung, welche in einer Stapelrichtung oder Verspannungsrichtung der elektrochemischen Vorrichtung aufeinanderfolgen und sich ungünstig addieren und somit zu einer lokal zu starken oder zu geringen Dichtpressung führen können, erfolgen.

Das plastisch verformbare Tragelement kann beispielsweise aus einem Dünnblech oder aus einer Edelstahlfolie gebildet sein.

Durch die Kombination eines plastisch verformbaren Tragelements, welches dem Ausgleich von statischen Dickentoleranzen der Bauteile der elektrochemische Vorrichtung dient, mit einem elastisch verformbaren Dichtelement, das durch seine Elastizität Dichtspaltschwankungen bei dynamischen Laständerungen im Betrieb der elektrochemischen Vorrichtung ausgleichen kann, wird durch die erfindungsgemäße Dichtungsanordnung über eine lange Betriebsdauer hinweg in allen Betriebszuständen der elektrochemischen Vorrichtung eine ausreichende fluiddichte Abdichtung erzielt.

Das Dichtelement der Dichtungsanordnung ist vorzugsweise an dem Tragelement der Dichtungsanordnung angeordnet.

Das Dichtelement der Dichtungsanordnung ist ferner vorzugsweise an dem Tragelement festgelegt, insbesondere stoffschlüssig mit dem Tragelement verbunden.

Beispielsweise kann vorgesehen sein, dass das Dichtelement mittels eines Musterdruckverfahrens, insbesondere eines Siebdruckverfahrens, auf das Tragelement aufgebracht wird.

Alternativ oder ergänzend hierzu kann vorgesehen sein, dass das Dichtelement durch Dispensieren einer Dichtraupe aus einem Elastomermaterial auf das Tragelement aufgebracht wird.

Das Material des Dichtelements kann insbesondere mittels eines Roboters auf das Tragelement appliziert werden.

Das Dichtelement kann insbesondere als eine CIP-Raupe ("cured in place") ausgebildet sein.

Ferner kann auch vorgesehen sein, dass das Dichtelement nicht an dem Tragelement, sondern an einem dem Tragelement gegenüberliegenden Bauelement, das insbesondere ein metallisches Material umfasst und beispielsweise aus einem metallischen Material gebildet ist, festgelegt, insbesondere stoffschlüssig mit diesem Bauelement verbunden, ist.

Bei einer besonderen Ausgestaltung der Erfindung ist vorgesehen, dass das Tragelement eine Sicke umfasst.

Eine solche Sicke kann insbesondere als eine Vollsicke (mit zwei Sickenflanken und einer dazwischenliegenden Sickenkuppe) oder als eine Halbsicke (mit nur einer Sickenflanke) ausgebildet sein.

Eine solche Sicke kann insbesondere durch einen Umformvorgang, insbesondere einen Prägevorgang, an einem Bauteil der elektrochemischen Vorrichtung, insbesondere an einer Bipolarplatte oder an einem Teil einer Bipolarplatte, ausgebildet sein.

Bei einer besonderen Ausgestaltung der Erfindung ist vorgesehen, dass das Tragelement einen Bestandteil eines ersten Bauteils der elektrochemischen Vorrichtung bildet und dass das Dichtelement im montierten Zustand der elektrochemischen Vorrichtung zwischen dem ersten Bauteil und einem zweiten Bauteil der elektrochemischen Vorrichtung angeordnet ist.

Vorzugsweise dichtet das Dichtelement im montierten Zustand der elektrochemischen Vorrichtung einen Dichtspalt zwischen dem ersten Bauteil und dem zweiten Bauteil im Wesentlichen fluiddicht ab.

Das erste Bauteil und/oder das zweite Bauteil der elektrochemischen Vorrichtung kann insbesondere eine Bipolarplatte oder ein Teil einer Bipolarplatte, insbesondere eine Lage einer mehrlagigen Bipolarplatte, sein.

Das Dichtelement kann an dem ersten Bauteil und/oder an dem zweiten Bauteil der elektrochemischen Vorrichtung, insbesondere stoffschlüssig, festgelegt sein.

Das Dichtelement kann zumindest teilweise, vorzugsweise im Wesentlichen vollständig, an einem Bereich des Tragelements angeordnet sein, welcher zu dem zweiten Bauteil hin vorspringt.

Alternativ oder ergänzend hierzu kann auch vorgesehen sein, dass das Dichtelement zumindest teilweise, vorzugsweise im Wesentlichen vollständig, an einem Bereich des Tragelements angeordnet ist, welcher zu einer dem zweiten Bauteil abgewandten Seite des ersten Bauteils hin vorspringt.

Um die Linienpressung entlang der Dichtlinie der Dichtungsanordnung zu erhöhen, kann vorgesehen sein, dass das zweite Bauteil einen zu dem Dichtelement hin vorspringenden Vorsprung aufweist.

Ein solcher Vorsprung kann insbesondere durch einen Umformvorgang, insbesondere durch einen Prägevorgang, an dem zweiten Bauteil erzeugt sein.

Bei einer bevorzugten Ausgestaltung der Erfindung umfasst die elektrochemische Vorrichtung einen Stapel aus mehreren längs einer Stapelrichtung aufeinanderfolgenden elektrochemischen Einheiten, beispielsweise Brennstoffzelleneinheiten oder Elektrolyseeinheiten, und eine Spannvorrichtung zum Beaufschlagen der elektrochemischen Einheiten mit einer längs der Stapelrichtung gerichteten Spannkraft.

Dabei kann vorgesehen sein, dass das Tragelement und/oder das Dichtelement in einem ersten Bereich der elektrochemischen Vorrichtung, in welchem die Spannkraft größer ist als in einem zweiten Bereich der elektrochemischen Vorrichtung, eine andere, insbesondere eine größere, Breite aufweist als in dem zweiten Bereich der elektrochemischen Vorrichtung.

Alternativ oder ergänzend hierzu kann auch vorgesehen sein, dass das Tragelement und/oder das Dichtelement in einem ersten Bereich der elektrochemischen Vorrichtung, in welchem die Spannkraft größer ist als in einem zweiten Bereich der elektrochemischen Vorrichtung, eine andere, insbesondere eine geringere, Höhe aufweist als in dem zweiten Bereich der elektrochemischen Vorrichtung.

Bei der Erfindung umfasst die elektrochemische Vorrichtung mindestens einen Mediumkanal, der sich längs einer Stapelrichtung durch mehrere längs der Stapelrichtung aufeinanderfolgende elektrochemische Einheiten, beispielsweise Brennstoffzelleneinheiten oder Elektrolyseeinheiten, der elektrochemischen Vorrichtung hindurch erstreckt, ein Strömungsfeld, durch welches ein fluides Medium von dem Mediumkanal quer, vorzugsweise im Wesentlichen senkrecht, zu der Stapelrichtung zu einem anderen Mediumkanal der elektrochemischen Vorrichtung strömen kann, und mindestens einen Verbindungskanal, durch welchen das Strömungsfeld und der Mediumkanal in Fluidverbindung miteinander stehen.

Dabei umfasst die Dichtungsanordnung einen Strömungsfeld-Abschnitt, welcher zwischen dem Mediumkanal und dem Strömungsfeld verläuft und den mindestens einen Verbindungskanal quert.

Ein solcher Strömungsfeld-Abschnitt kann insbesondere das Strömungsfeld ringförmig umgeben.

Ein solcher Strömungsfeld-Abschnitt kann einen Verbindungskanal-Bereich, in welchem der Strömungsfeld-Abschnitt den mindestens einen Verbindungskanal quert, und mindestens einen in der Längsrichtung des Strömungsfeld-Abschnitts vor oder hinter dem Verbindungskanal-Bereich liegenden Nachbarbereich umfassen, wobei das Dichtelement im montierten und/oder verspannten Zustand der Dichtungsanordnung in dem Verbindungskanal-Bereich eine geringere Höhe aufweist als in dem Nachbarbereich.

Das Dichtelement kann bereits in einem entspannten Ausgangszustand vor dem Verspannen der Bauteile der elektrochemischen Vorrichtung in dem Verbindungskanal-Bereich eine geringere Höhe aufweisen als in dem Nachbarbereich.

Alternativ hierzu kann vorgesehen sein, dass das Dichtelement erst im montierten und/oder verspannten Zustand der Dichtungsanordnung in dem Verbindungskanal-Bereich eine geringere Höhe aufweist als in dem Nachbarbereich.

Ferner kann zwischen dem Verbindungskanal-Bereich und dem Nachbarbereich ein Übergangsbereich angeordnet sein, in welchem die Höhe des Dichtelements im montierten und/oder verspannten Zustand der Dichtungsanordnung sich kontinuierlich, insbesondere im Wesentlichen linear, längs der Längsrichtung des Strömungsfeld-Abschnitts der Dichtungsanordnung verändert.

Ferner kann vorgesehen sein, dass die Dichtungsanordnung einen Mediumkanal-Abschnitt umfasst, welcher den Mediumkanal zumindest teilweise umgibt, wobei das Dichtelement im montierten und/oder verspannten Zustand der Dichtungsanordnung in dem Mediumkanal-Abschnitt eine größere Höhe aufweist als in dem Verbindungskanal-Bereich des Strömungsfeld-Abschnitts.

Das Dichtelement kann bereits in einem entspannten Ausgangszustand vor dem Verspannen der Bauteile der elektrochemischen Vorrichtung in dem Mediumkanal-Abschnitt eine größere Höhe aufweisen als in dem Verbindungskanal-Bereich des Strömungsfeld-Abschnitts.

Alternativ hierzu kann vorgesehen sein, dass das Dichtelement erst im montierten und/oder verspannten Zustand der Dichtungsanordnung in dem Mediumkanal-Abschnitt eine größere Höhe aufweist als in dem Verbindungskanal-Bereich des Strömungsfeld-Abschnitts.

Zwischen dem Mediumkanal-Abschnitt und dem Verbindungskanal-Bereich des Strömungsfeld-Abschnitts kann ein Übergangsbereich angeordnet sein, in welchem die Höhe des Dichtelements im montierten und/oder verspannten Zustand der Dichtungsanordnung sich kontinuierlich, vorzugsweise im Wesentlichen linear, längs der Längsrichtung der Dichtungsanordnung in dem Übergangsbereich verändert.

Das Tragelement der Dichtungsanordnung kann mindestens eine Durchtrittsöffnung aufweisen, durch die sich ein Verbindungskanal, durch welchen das Strömungsfeld und der Mediumkanal in Fluidverbindung miteinander stehen, hindurch erstreckt.

Das Dichtelement weist vorzugsweise eine Höhe auf, welche größer ist als die Materialstärke des Tragelements.

Das Dichtelement der Dichtanordnung ist vorzugsweise auf einem Teil einer mehrlagigen Bipolarplatte der elektrochemischen Vorrichtung angeordnet, insbesondere auf einer Lage einer mehrlagigen Bipolarplatte.

Um eine Fluidverbindung zwischen einem Mediumkanal und einem Strömungsfeld der elektrochemischen Vorrichtung herzustellen, kann vorgesehen sein, dass das Dichtelement der Dichtungsanordnung mindestens eine Unterbrechung aufweist, durch die ein fluides Medium durch das Dichtelement hindurch in das Strömungsfeld gelangen kann.

Alternativ oder ergänzend hierzu kann vorgesehen sein, dass ein Verbindungskanal, welcher den Mediumkanal und das Strömungsfeld miteinander verbindet, auf der dem Dichtelement abgewandten Seite des Tragelements angeordnet ist und/oder sich durch mindestens eine Durchtrittsöffnung in dem Tragelement hindurch erstreckt, so dass der Verbindungskanal unter dem Dichtelement hindurchgeführt ist.

Die erfindungsgemäße Dichtungsanordnung eignet sich insbesondere zur Verwendung in einer elektrochemischen Vorrichtung mit einer Polymerelektrolytmembran (PEM), insbesondere in einem Brennstoffzellenstapel oder einem Elektrolyseur mit einer solchen Polymerelektrolytmembran.

Weitere Merkmale und Vorteile der Erfindung sind Gegenstand der nachfolgenden Beschreibung und der zeichnerischen Darstellung von Ausführungsbeispielen.

In den Zeichnungen zeigen:

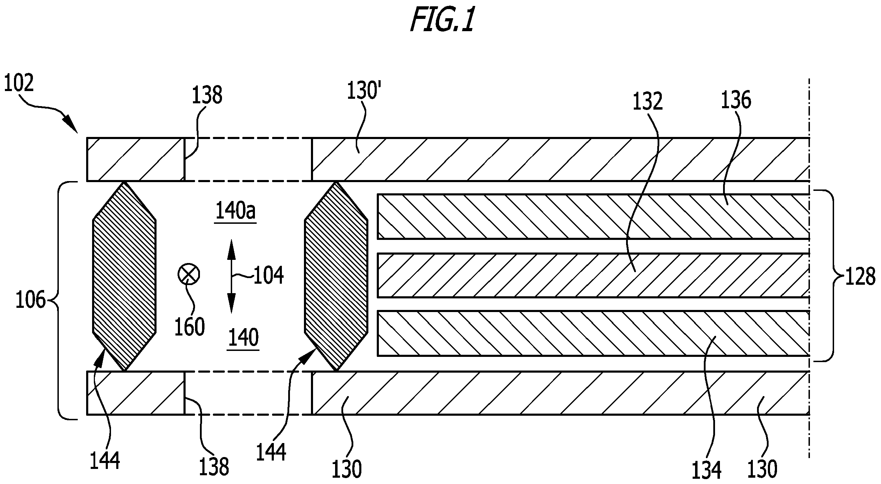

- Fig. 1: einen schematischen Schnitt durch eine elektrochemische Vorrichtung, insbesondere einen Brennstoffzellenstapel, welche mehrere in einer Stapelrichtung aufeinanderfolgende elektrochemische Einheiten, beispielsweise Brennstoffzelleneinheiten, umfasst, wobei in Fig. 1 eine Bipolarplatte und eine MembranElektroden-Anordnung einer ersten elektrochemischen Einheit und eine Bipolarplatte einer benachbarten zweiten elektrochemischen Einheit dargestellt sind sowie eine Dichtungsanordnung, welche zwischen den Bipolarplatten der in der Stapelrichtung aufeinanderfolgenden elektrochemischen Einheiten abdichtet;

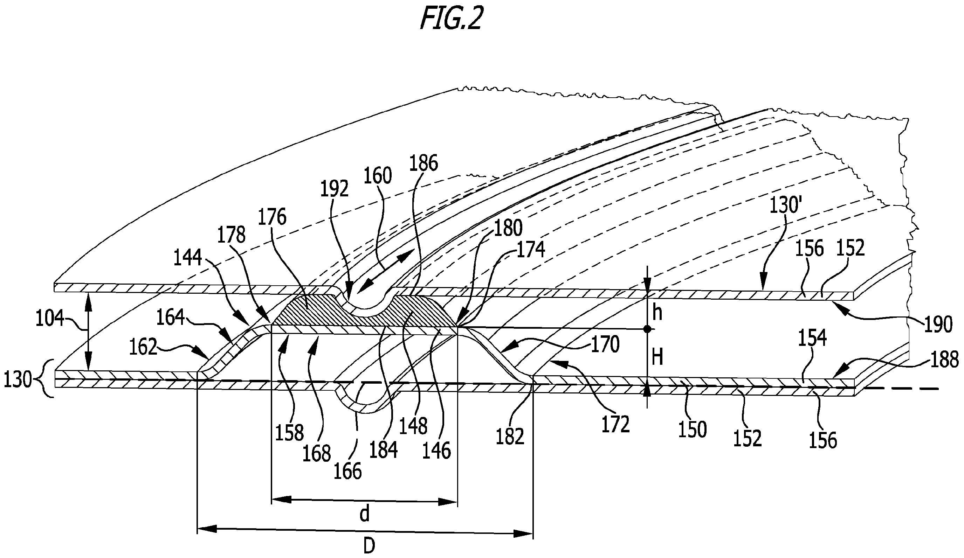

- Fig. 2: eine ausschnittsweise schematische perspektivische Darstellung einer Dichtungsanordnung für eine elektrochemische Vorrichtung, welche ein Tragelement und ein an dem Tragelement angeordnetes Dichtelement umfasst, wobei das Dichtelement an einem Bereich des Tragelement angeordnet ist, welcher zu einer benachbarten Bipolarplatte hin vorspringt;

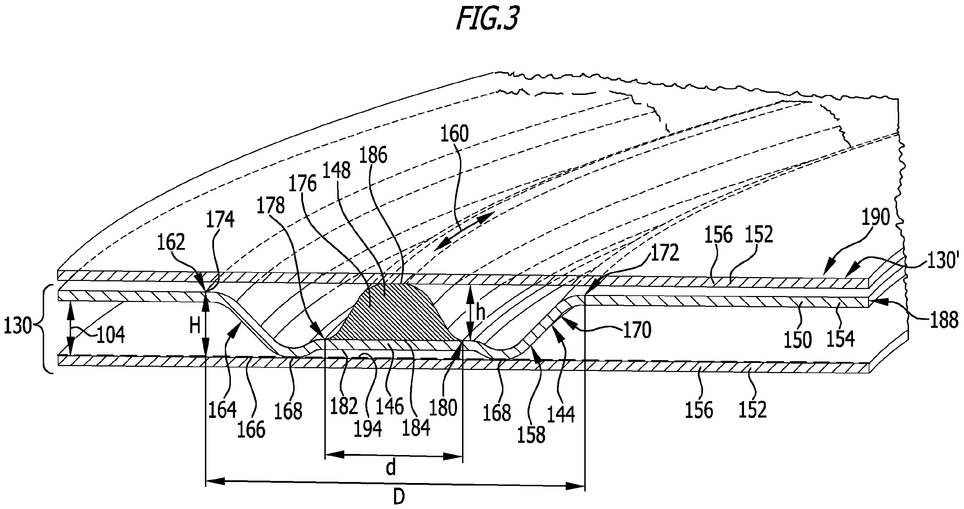

- Fig. 3: eine ausschnittsweise schematische perspektivische Darstellung einer anderen Ausführungsform einer Dichtungsanordnung, welche ein Tragelement und ein an dem Tragelement angeordnetes Dichtelement umfasst, wobei das Tragelement einen Bestandteil einer ersten Lage einer mehrlagigen Bipolarplatte bildet und das Dichtelement an einem Bereich des Tragelements angeordnet ist, welcher zu einer einer zweiten Lage einer benachbarten Bipolarplatte abgewandten Seite der ersten Lage der Bipolarplatte, an welcher das Tragelement ausgebildet ist, hin vorspringt;

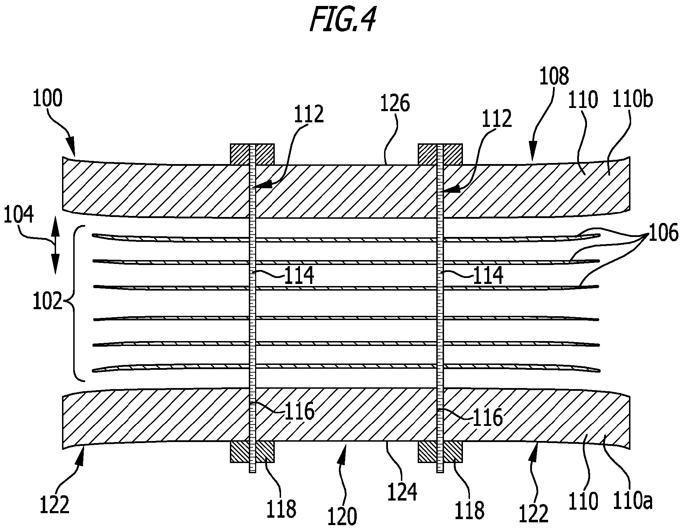

- Fig. 4: einen schematischen Schnitt durch eine elektrochemische Vorrichtung, welche einen Stapel aus mehreren längs einer Stapelrichtung aufeinanderfolgenden elektrochemischen Einheiten und eine Spannvorrichtung zum Beaufschlagen der elektrochemischen Einheiten mit einer längs der Stapelrichtung gerichteten Spannkraft umfasst, längs der Stapelrichtung;

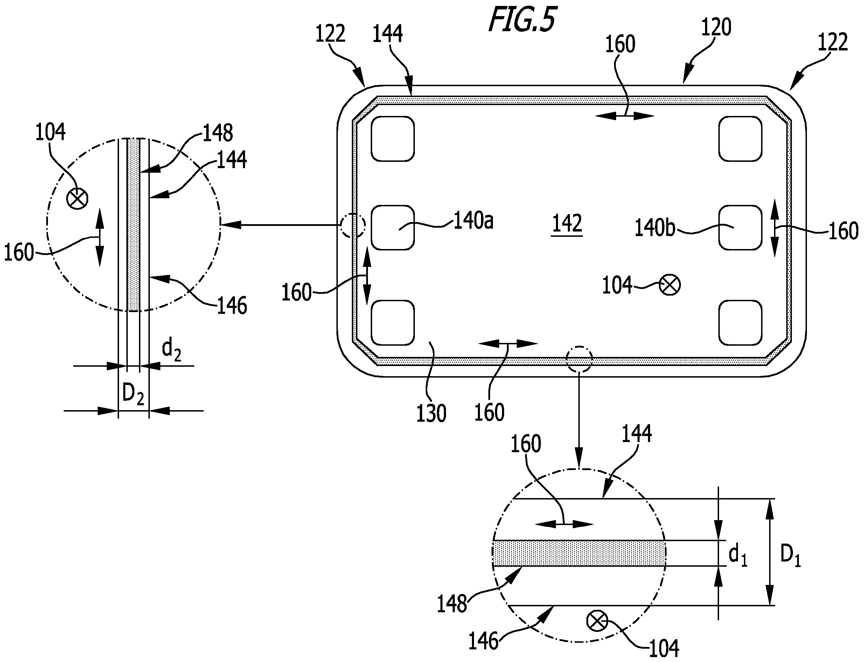

- Fig. 5: eine schematische Draufsicht auf eine Bipolarplatte der elektrochemischen Vorrichtung aus Fig. 4 mit einer daran angeordneten Dichtungsanordnung, wobei die Dichtungsanordnung ein Tragelement und ein an dem Tragelement angeordnetes Dichtelement umfasst und wobei das Tragelement und/oder das Dichtelement in einem ersten Bereich der elektrochemischen Vorrichtung, in welchem die Spannkraft geringer ist als in einem zweiten Bereich der elektrochemischen Vorrichtung, ein andere Breite und/oder eine andere Höhe aufweist als in dem zweiten Bereich der elektrochemischen Vorrichtung;

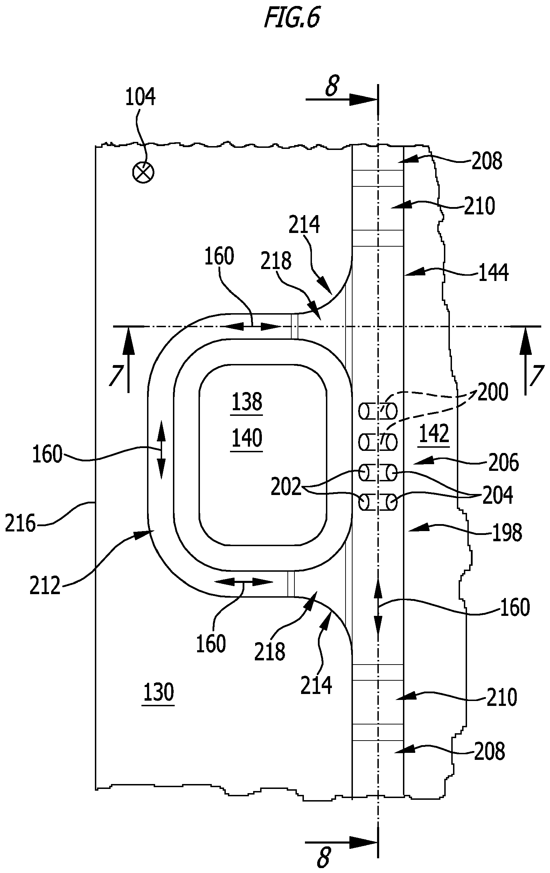

- Fig. 6: eine schematische Draufsicht auf einen Mediumkanal der elektrochemischen Vorrichtung, der durch einen Strömungsfeld-Abschnitt einer Dichtungsanordnung von einem Strömungsfeld getrennt ist, durch welches ein Medium aus dem Mediumkanal quer zu der Stapelrichtung von dem Mediumkanal zu einem anderen Mediumkanal strömen kann, wobei ein von dem StrömungsfeldAbschnitt abzweigender Mediumkanal-Abschnitt der Dichtungsanordnung den Mediumkanal zumindest teilweise umgibt und von einem Außenrand der elektrochemischen Vorrichtung trennt;

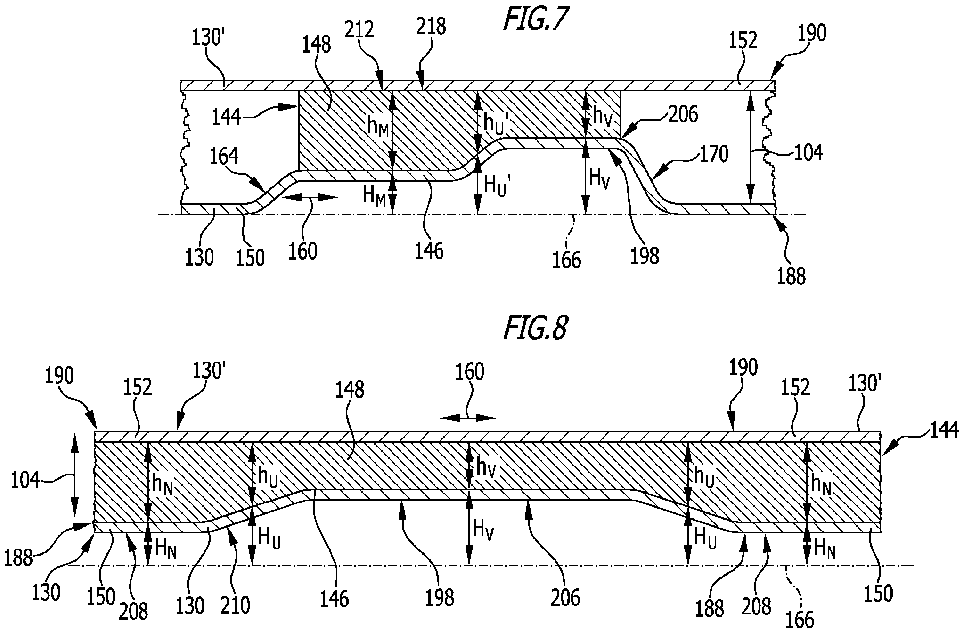

- Fig. 7: einen Schnitt durch den Mediumkanal-Abschnitt und den Strömungsfeld-Abschnitt der Dichtungsanordnung aus Fig. 6, längs der Linie 7-7 in Fig. 6;
- Fig. 8: einen Längsschnitt durch den Strömungsfeld-Abschnitt der Dichtungsanordnung aus Fig. 6, längs der Linie 8-8 in Fig. 6; und

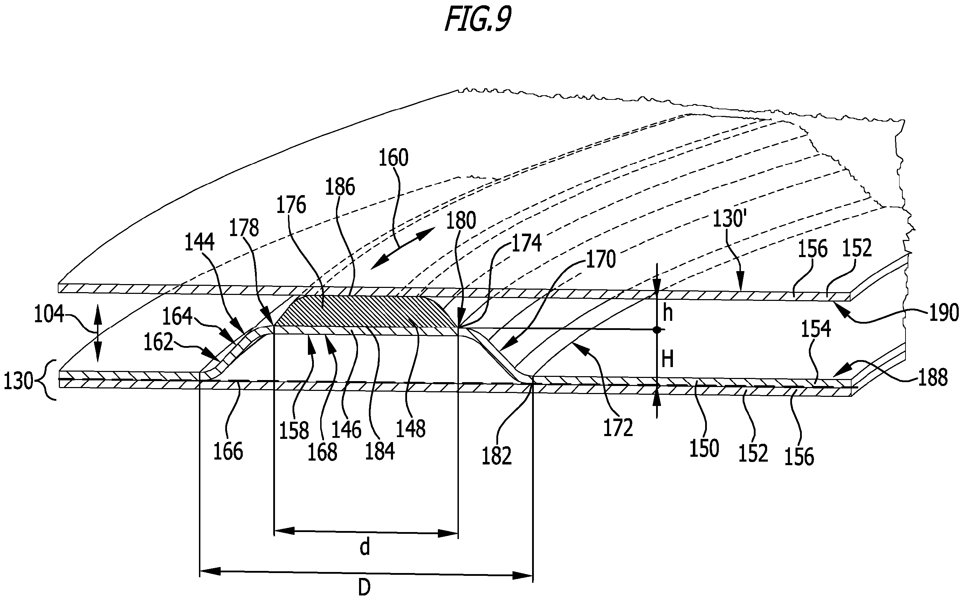

- Fig. 9: eine der Fig. 2 entsprechende schematische perspektivische Darstellung einer weiteren Ausführungsform einer Dichtungsanordnung, welche ein Tragelement und ein an dem Tragelement angeordnetes Dichtelement umfasst, wobei eine benachbarte Bipolarplatte keinen zu dem Dichtelement hin vorspringenden Vorsprung aufweist.

Gleiche oder funktional äquivalente Elemente sind in allen Figuren mit denselben Bezugszeichen bezeichnet.

Eine insbesondere in den Fig. 1 und 4 dargestellte, als Ganzes mit 100 bezeichnete elektrochemische Vorrichtung, beispielsweise ein Brennstoffzellenstapel oder ein Elektrolyseur, umfasst einen Stapel 102, der mehrere in einer Stapelrichtung 104 aufeinanderfolgende elektrochemische Einheiten 106, beispielsweise Brennstoffzelleneinheiten oder Elektrolyseeinheiten, und eine Spannvorrichtung 108 zum Beaufschlagen der elektrochemischen Einheiten 106 mit einer längs der Stapelrichtung 104 gerichteten Spannkraft.

Die Spannvorrichtung 108 kann beispielsweise zwei Endplatten 110 umfassen, zwischen welchen der Stapel 102 angeordnet ist, und eines oder mehrere Spannelemente 112, mittels welcher die Endplatten 110 gegeneinander verspannbar sind.

Die Spannelemente können beispielsweise als Zugstangen 114 ausgebildet sein, welche sich durch jeweils zugeordnete Durchtrittsöffnungen 116 in den Endplatten 110 hindurch erstrecken und deren freie Enden, die über die Endplatten 110 hinaus vorstehen, durch jeweils ein Sicherungselement 118, beispielsweise eine mit einem Außengewinde der Zugstange 114 in Eingriff stehende Mutter, gegen ein Zurückbewegen durch die jeweilige Durchtrittsöffnung 116 hindurch gesichert sind.

Statt der Zugstangen 114 mit beidseits angeordneten Muttern können beispielsweise auch Spannschrauben verwendet werden, die an einem Ende einen Schraubenkopf aufweisen und an dem anderen durch eine Mutter gesichert sind.

Ferner ist es beispielsweise auch möglich, statt der Zugstangen 114 ein oder mehrere Spannbänder zu verwenden, welche sich um die Endplatten 110 herum erstrecken.

Die Spannkraft, welche auf die elektrochemischen Einheiten 106 des Stapels 102 längs der Stapelrichtung 104 von der Spannvorrichtung 108 ausgeübt wird, nimmt mit wachsendem Abstand von den Spannelementen 112 ab.

Insbesondere ist bei der in Fig. 4 dargestellten elektrochemischen Vorrichtung 100 die Spannkraft in einem mittigen ersten Bereich 120 der elektrochemischen Vorrichtung 100 größer als in seitlichen Randbereichen der elektrochemischen Vorrichtung 100, welche zweite Bereiche 122 der elektrochemischen Vorrichtung 100 bilden.

Aufgrund der inhomogenen Verteilung der Spannkräfte weisen die Endplatten 110 und die elektrochemischen Einheiten 106 der elektrochemischen Vorrichtung 100 eine Durchbiegung auf, so dass die Gesamthöhe der elektrochemischen Vorrichtung 100 von einer Unterseite 124 der unteren Endplatte 110 bis zu einer Oberseite 126 der oberen Endplatte 110b im ersten Bereich 120 der elektrochemischen Vorrichtung 100 kleiner ist als in den zweiten Bereichen 122.

Wie am besten aus Fig. 1 zu ersehen ist, umfasst jede elektrochemische Einheit 106 der elektrochemischen Vorrichtung 100 jeweils eine Membran-Elektroden-Anordnung (MEA) 128 und eine Bipolarplatte 130.

Die Membran-Elektroden-Anordnung 128 kann beispielsweise eine katalysatorbeschichtete Membran ("Catalyst Coated Membrane"; CCM) 132 und zu den beiden Seiten der Membran 132 angeordnete Gasdiffusionslagen 134 und 136 umfassen.

Die Bipolarplatte 130 ist beispielsweise aus einem metallischen Material gebildet.

Die Bipolarplatte 130 weist mehrere Medium-Durchtrittsöffnungen 138 auf, durch welche jeweils ein der elektrochemischen Vorrichtung zuzuführendes fluides Medium (im Falle eines Brennstoffzellenstapels beispielsweise ein Brenngas, ein Oxidationsmittel oder ein Kühlmittel) durch die Bipolarplatte 130 hindurchtreten kann.

Die Medium-Durchtrittsöffnungen 138 der im Stapel 102 aufeinanderfolgenden Bipolarplatten 130 und die in der Stapelrichtung 104 zwischen den Medium-Durchtrittsöffnungen 138 liegenden Zwischenräume bilden zusammen jeweils einen Mediumkanal 140.

Jedem Mediumkanal 140a, durch welchen ein fluides Medium der elektrochemischen Vorrichtung 100 zuführbar ist, ist jeweils mindestens ein anderer Mediumkanal 140b zugeordnet, durch welchen das betreffende fluide Medium aus der elektrochemischen Vorrichtung 100 abführbar ist.

Durch ein dazwischenliegendes Strömungsfeld 142, welches vorzugsweise an einer Oberfläche einer benachbarten Bipolarplatte 130 ausgebildet ist, kann das Medium aus dem ersten Mediumkanal 140a quer, vorzugsweise im Wesentlichen senkrecht, zu der Stapelrichtung 104 zu dem zweiten Mediumkanal 140b strömen.

Ein unerwünschtes Austreten des fluiden Mediums aus dem zugeordneten Mediumkanal 140 und aus dem zugeordneten Strömungsfeld 142 wird durch eine Dichtungsanordnung 144 vermieden, welche in Fig. 1 rein schematisch dargestellt ist.

Details zur Ausgestaltung der Dichtungsanordnung 144 sind beispielsweise Fig. 2 zu entnehmen.

Die Dichtungsanordnung 144 umfasst ein Tragelement 146 und ein an dem Tragelement 146 angeordnetes Dichtelement 148, welches ein Elastomermaterial umfasst.

Das Tragelement 146 ist bei dieser Ausführungsform als ein Bestandteil der Bipolarplatte 130, insbesondere als ein Bestandteil eines ersten Teils 150 der bei dieser Ausführungsform mehrteilig ausgebildeten Bipolarplatte 130, ausgebildet.

Die Bipolarplatte 130 umfasst bei dieser Ausführungsform ein zweites Teil 152, das längs (nicht dargestellter) Verbindungslinien, vorzugsweise stoffschlüssig, insbesondere durch Verschweißen, beispielsweise durch Laserschweißung, im Wesentlichen fluiddicht an dem ersten Teil 150 der Bipolarplatte 130 festgelegt ist.

Die beiden Teile 150 und 152 der Bipolarplatte 130 können insbesondere als eine erste Lage 154 und eine zweite Lage 156 der Bipolarplatte 130 ausgebildet sein.

Das Tragelement 146 umfasst eine Sicke 158, welche sich in einer Längsrichtung 160 der Dichtungsanordnung 144 erstreckt.

Bei der in Fig. 2 dargestellten Ausführungsform der Dichtungsanordnung 144 ist die Sicke 158 als eine Vollsicke ausgebildet, welche sich von einem ersten Sickenfuß oder Sickenrand 162 über eine erste Sickenflanke 164, welche gegenüber einer Bezugsebene 166 der Bipolarplatte 130 geneigt ist, eine Sickenkuppe 168, welche vorzugsweise im Wesentlichen parallel zu der Bezugsebene 166 ausgerichtet ist, und eine zweite Sickenflanke 170, welche gegenüber der Bezugsebene 166 geneigt ist, bis zu einem zweiten Sickenfuß oder Sickenrand 172 erstreckt.

Die Bezugsebene 166 ist senkrecht zur Stapelrichtung 104 ausgerichtet. Die Position der Bezugsebene 166 längs der Stapelrichtung 104 ist so gewählt worden, dass eine tiefste Stelle des Tragelements 146, von welcher aus die Höhe H des Tragelements 146 (längs der Stapelrichtung 104) gemessen wird, in der Bezugsebene 166 liegt.

Der längs der Bezugsebene 166 und senkrecht zur Längsrichtung 160 genommene Abstand D zwischen dem ersten Sickenrand 162 und dem zweiten Sickenrand 172 wird im Folgenden als die Breite des Tragelements 146, insbesondere als die Breite der Sicke 158, bezeichnet.

Das an einer Oberseite 174 des Tragelements 146, insbesondere an einer Oberseite der Sickenkuppe 168, angeordnete Dichtelement 148 erstreckt sich ebenfalls in der Längsrichtung 160 der Dichtungsanordnung 144.

Das Dichtelement 148 weist beispielsweise die Form eines Dichtwulstes 176 auf, welcher sich von einem dem ersten Sickenrand 162 zugewandten ersten Dichtelementrand 178 quer zur Längsrichtung 160 bis zu einem dem zweiten Sickenrand 172 zugewandten zweiten Dichtelementrand 180 erstreckt.

Der längs der Bezugsebene 166 und senkrecht zur Längsrichtung 160 genommene Abstand d zwischen dem ersten Dichtelementrand 178 und dem zweiten Dichtelementrand 180 wird im Folgenden als die Breite des Dichtelements 148 bezeichnet.

Das Dichtelement 148 ist vorzugsweise stoffschlüssig mit dem Tragelement 146 verbunden.

Insbesondere kann vorgesehen sein, dass das Dichtelement 148 durch ein Musterdruckverfahren, insbesondere ein Siebdruckverfahren, oder ein Dispensierverfahren auf das Tragelement 146 aufgebracht und anschließend ausgehärtet worden ist.

Insbesondere kann das Dichtelement 148 als eine CIP-Raupe ("cured in place") ausgebildet sein, die vorzugsweise mittels eines Roboters automatisch appliziert wird.

Die Breite D des Tragelements 146 und/oder die Breite d des Dichtelements 148 können längs der Längsrichtung 160 der Dichtungsanordnung 144 variieren.

Ebenso können die Höhe H des Tragelements 146 und/oder die Höhe h des Dichtelements 148 längs der Längsrichtung 160 der Dichtungsanordnung 144 variieren.

Dabei entspricht die Höhe H des Tragelements 146 dem Abstand längs der Stapelrichtung 104 zwischen einer tiefsten Stelle einer Unterseite 182 des Tragelements 146, beispielsweise an einem der Sickenränder 162 oder 170, einerseits und der höchsten Stelle der Oberseite 174 des Tragelements 146, beispielsweise im Bereich der Sickenkuppe 168, andererseits.

Die Höhe h des Dichtelements 148 entspricht dem Abstand längs der Stapelrichtung 104 zwischen einer tiefsten Stelle einer Unterseite 184 des Dichtelements 148 einerseits und einer höchsten Stelle einer Oberseite 186 des Dichtelements andererseits.

Mit seiner Oberseite 186 liegt das Dichtelement 148 an einer weiteren Bipolarplatte 130', insbesondere an einem zweiten Teil 152 einer mehrteiligen Bipolarplatte 130', abdichtend an.

Die erste Bipolarplatte 130, an welcher das Dichtelement 148 angeordnet ist, und die zweite Bipolarplatte 130', an welcher das Dichtelement 148 abdichtend anliegt, bilden somit ein erstes Bauteil 188 bzw. ein zweites Bauteil 190, zwischen denen das Dichtelement 148 im montierten Zustand der elektrochemischen Vorrichtung 100 abdichtet.

Das Dichtelement 148 könnte statt an dem Tragelement 146 an dem dem Tragelement 146 gegenüberliegenden zweiten Bauteil 190, beispielsweise an dem zweiten Teil 152, insbesondere der zweiten Lage 156, der weiteren Bipolarplatte 130', insbesondere stoffschlüssig, festgelegt sein.

Um die das Dichtelement 148 im montierten Zustand der elektrochemischen Vorrichtung 100 komprimierende Spannkraft lokal zu erhöhen, kann vorgesehen sein, dass das zweite Bauteil 190, insbesondere das zweite Teil 152 der Bipolarplatte 130', einen zu dem Dichtelement 148 hin gerichteten Vorsprung 192 aufweist, welcher sich in der Längsrichtung 160 der Dichtungsanordnung 144 erstreckt.

Dieser Vorsprung 192 kann insbesondere durch einen Umformvorgang an dem zweiten Bauteil 190, insbesondere durch einen Prägevorgang, hergestellt sein.

Bei einer in Fig. 9 dargestellten Variante der in Fig. 2 dargestellten Dichtungsanordnung 144 weist das zweite Bauteil 190, insbesondere das zweite Teil 152 der Bipolarplatte 130', keinen zu dem Dichtelement 148 hin gerichteten Vorsprung auf, so dass bei dieser Variante das Dichtelement 148 mit einer im Wesentlichen ebenen Anlagefläche an dem zweiten Bauteil 190 anliegt.

Im Übrigen stimmt die in Fig. 9 dargestellte zweite Ausführungsform hinsichtlich Aufbau, Funktion und Herstellungsweise mit der in Fig. 2 dargestellten Ausführungsform überein, auf deren vorstehende Beschreibung insoweit Bezug genommen wird.

Bei einer in Fig. 3 dargestellten alternativen Ausführungsform einer Dichtungsanordnung 144 springt der Bereich des Tragelements 146, an welchem das Dichtelement 148 festgelegt ist, nicht zu dem zweiten Bauteil 190 hin vor, sondern ist das Dichtelement 148 an einem Bereich des Tragelements 146 angeordnet, welcher zu einer dem zweiten Bauteil 190 abgewandten Seite des ersten Bauteil 188 hin vorspringt.

Insbesondere umfasst bei dieser zweiten Ausführungsform das Tragelement 146 eine Sicke 158 mit zwei Sickenkuppen 168, die dem zweiten Bauteil 190, insbesondere dem zweiten Teil 152 der zweiten Bipolarplatte 130', abgewandt sind und sich an dem zweiten Teil 152 der ersten Bipolarplatte 130 abstützen.

Zwischen den Sickenkuppen 168 ist das Tragelement 146 in der Stapelrichtung 104 von dem zweiten Teil 152 der ersten Bipolarplatte 130' beabstandet.

Bei dieser Ausführungsform kann die Höhe h des Dichtelements 148 aus dem Elastomermaterial größer sein als bei der in Fig. 2 dargestellten ersten Ausführungsform.

Die Wahl der Bezugsebene 166 ist in Fig. 3 so vorgenommen worden, dass sie mit der Ebene der Sickenkuppen 168 des ersten Teils 150 der Bipolarplatte 130 übereinstimmt. Somit bildet die Bezugsebene 166 auch bei der Ausführungsform gemäß Fig. 3 die Ebene, von welcher aus die Höhe H des Tragelements 146 gemessen wird.

Im Übrigen stimmt die in Fig. 3 dargestellte zweite Ausführungsform hinsichtlich Aufbau, Funktion und Herstellungsweise mit der in Fig. 2 dargestellten Ausführungsform überein, auf deren vorstehende Beschreibung insoweit Bezug genommen wird.

Bei allen in den Fig. 2, 3 und 9 dargestellten Ausführungsformen der Dichtungsanordnung 144 umfasst die Dichtungsanordnung 144 ein plastisch verformbares Tragelement 146, welches einen Toleranzausgleich bei der Erstmontage der elektrochemischen Vorrichtung 100 ermöglicht.

Ferner umfasst die Dichtungsanordnung 144 bei jeder dieser Ausführungsformen ein Dichtelement 148, das ein Elastomermaterial umfasst und daher eine elastische Verformbarkeit aufweist, durch welche dynamische Dickenschwankungen der Bauteile der elektrochemischen Vorrichtung 100 im laufenden Betrieb der elektrochemischen Vorrichtung 100, beispielsweise aufgrund von Temperaturschwankungen und/oder Feuchteschwankungen, ausgeglichen werden können.

Ferner weist jede der Dichtungsanordnungen 144 eine Höhenprofilierung und/oder eine Breitenprofilierung längs ihrer Längsrichtung 160 auf, welche es ermöglicht, die auf die elektrochemischen Einheiten 106 einwirkende Spannkraft möglichst gleichmäßig über die senkrecht zur Stapelrichtung 104 ausgerichteten Ebenen der elektrochemischen Einheiten 106 zu verteilen.

Diese in der Längsrichtung 160 variable Profilierung der Dichtungsanordnung 144 ist schematisch in Fig. 5 dargestellt.

Aus Fig. 5 ist zu ersehen, dass die Dichtungsanordnung 144 beispielsweise eine Breitenprofilierung aufweisen kann, wobei in dem dargestellten Ausführungsbeispiel das Tragelement 146, insbesondere eine Sicke 158, und/oder das Dichtelement 148 in dem ersten Bereich 120 der elektrochemischen Vorrichtung 100, in welchem die mittels der Spannvorrichtung 108 ausgeübte Spannkraft größer ist als in den zweiten Bereichen 122 (den seitlichen Randbereichen der elektrochemischen Vorrichtung 100), eine größere Breite D₁ bzw. d₁ aufweist als in den zweiten Bereichen 122 (D₁>D₂ und/oder d₁>d₂).

Ferner ist vorzugsweise vorgesehen, dass das Tragelement 146 und/oder das Dichtelement 148 in dem ersten Bereich 120 der elektrochemischen Vorrichtung 100, in welchem die Spannkraft größer ist als in den zweiten Bereichen 122 der elektrochemischen Vorrichtung 100, eine geringere Höhe H₁ bzw. h₁ aufweist als in den zweiten Bereichen 122 (H₂>H₁ und/oder h₂>h₁).

Grundsätzlich kann aber auch vorgesehen sein, dass nur die Breite D des Tragelements 146, insbesondere der Sicke 158, variiert und die Breite d des Dichtelements 148 im Wesentlichen gleich groß bleibt oder sich sogar entgegengesetzt zur Breite D des Tragelements 146 verändert (also beispielsweise d₁<d₂).

Wenn ein Ausgleich der unterschiedlichen Spannkräfte zwischen dem ersten Bereich 10 und den zweiten Bereichen 122 bereits durch eine geeignete Höhenprofilierung der Dichtungsanordnung 144 erzielt wird, so kann auch vorgesehen sein, dass die Breite des Tragelements 146 und/oder die Breite d des Dichtelements 148 in dem ersten Bereich 120 und in den zweiten Bereichen 122 im Wesentlichen gleich groß ist oder sogar in entgegengesetzter Weise variiert (das heißt D₁<D₂ und/oder d₁<d₂).

Der Ein- oder Ausströmbereich, über welchen ein Mediumkanal 140 der elektrochemischen Vorrichtung 100 mit einem benachbarten Strömungsfeld 142 verbunden ist, ist in den Fig. 6 bis 8 im Einzelnen im montierten und/oder verspannten Zustand der Dichtungsanordnung 144 dargestellt.

Die Dichtungsanordnung 144 umfasst einen Strömungsfeld-Abschnitt 198, welcher zwischen dem Mediumkanal 140 einerseits und dem Strömungsfeld 142 andererseits verläuft und einen oder mehrere Verbindungskanäle 200 quert, durch welche das Strömungsfeld 142 und der Mediumkanal 140 in Fluidverbindung miteinander stehen.

Dabei verbinden die Verbindungskanäle 200 Durchtrittsöffnungen 202 in der ersten Sickenflanke 164 der Sicke 158 der Dichtungsanordnung 144 mit Durchtrittsöffnungen 204 in der gegenüberliegenden zweiten Sickenflanke 170 der Sicke 158.

Durch die Durchtrittsöffnungen 202 und 204 kann das fluide Medium aus dem Bereich oberhalb des ersten Teils 150 der Bipolarplatte 130 in den Bereich unterhalb des ersten Teils 150 der Bipolarplatte 130 gelangen.

Der Strömungsfeld-Abschnitt 198 der Dichtungsanordnung 144 kann das Strömungsfeld 142 an der Oberseite der Bipolarplatte 130 insbesondere ringförmig umgeben.

Der Strömungsfeld-Abschnitt 198 umfasst einen Verbindungskanal-Bereich 206, in welchem der Strömungsfeld-Abschnitt 198 den mindestens einen Verbindungskanal 200 quert und in welchem die Durchtrittsöffnungen 202 und 204 angeordnet sind.

Wie aus dem Längsschnitt durch den Strömungsfeld-Abschnitt 198 der Dichtungsanordnung 144 in Fig.8 zu ersehen ist, weist das Tragelement 146 in dem Verbindungskanal-Bereich 206 die Höhe H_{V} auf.

Ferner umfasst der Strömungsfeld-Abschnitt 198 der Dichtungsanordnung 144 in der Längsrichtung 160 vor bzw. hinter dem Verbindungskanal-Bereich 206 liegende Nachbarbereiche 208 der Dichtungsanordnung 144, in denen das Tragelement 146 die Höhe H_{N} aufweist, welche geringer ist als die Höhe H_{V} des Tragelements 146 in dem Verbindungskanal-Bereich 206.

Zwischen dem Verbindungskanal-Bereich 206 und jeweils einem Nachbarbereich 208 ist jeweils ein Übergangsbereich 210 der Dichtungsanordnung 144 angeordnet, in welchem die Höhe H_{U} des Tragelements 146, vorzugsweise kontinuierlich, insbesondere im Wesentlichen linear, längs der Längsrichtung 160 von der Höhe H_{V} am Rande des Verbindungskanal-Bereichs 206 bis auf die Höhe H_{N} am Rande des benachbarten Nachbarbereichs 208 abnimmt.

Mit der Höhe h des Dichtelements 148 verhält es sich in dem Ein- oder Ausströmbereich gerade umgekehrt. Wie am besten aus Fig. 8 zu ersehen ist, ist die Höhe h_{V} des Dichtelements 148 in dem Verbindungskanal-Bereich 206 geringer als die Höhe h_{N} des Dichtelements 148 in den Nachbarbereichen 208.

In den Übergangsbereichen 210 nimmt die Höhe h_{U} des Dichtelements 148, ausgehend von dem Wert h_{V} am Rand des Verbindungskanal-Bereichs 206, vorzugsweise kontinuierlich, insbesondere im Wesentlichen linear, längs der Längsrichtung 160 zu bis zu dem Wert h_{N} am Rand des jeweils benachbarten Nachbarbereichs 208.

In den Übergangsbereichen 210 bildet das Tragelement 146 eine gegenüber der Bezugsebene 166 und gegenüber der Stapelrichtung 104 geneigte Rampe, welche das Dichtelement 148 trägt.

Das dem ersten Bauteil 188, insbesondere dem ersten Teil 150 der ersten Bipolarplatte 130, an welcher das Dichtelement 148 angeordnet ist, gegenüberliegende zweite Bauteil 190, insbesondere der zweite Teil 152 der zweiten Bipolarplatte 130', ist bei der in den Fig. 6 bis 8 dargestellten Ausführungsform im Ein- oder Ausströmbereich des Mediumkanals 140 im Wesentlichen eben ausgebildet, so dass die Summe der Höhen H und h des Tragelements 146 bzw. des Dichtelements 148 längs der Längsrichtung 160 der Dichtungsanordnung 144 in diesem Bereich im montierten und/oder verspannten Zustand der Dichtungsanordnung 144 im Wesentlichen konstant ist (h_{N} + H_{N} = h_{U} + H_{U} = h_{V} + H_{V}).

Durch diese Ausgestaltung des Strömungsfeld-Abschnitts 198 der Dichtungsanordnung 144 wird einerseits erreicht, dass das Tragelement 146 im Verbindungskanal-Bereich 206 eine ausreichende Höhe aufweist, um mit Durchtrittsöffnungen 202 und 204 von ausreichend großem Strömungsquerschnitt versehen zu werden, so dass eine ausreichende Fluidströmung zwischen dem Mediumkanal 140 und dem Strömungsfeld 142 gewährleistet ist. Andererseits wird erreicht, dass außerhalb des Verbindungskanal-Bereichs 206 die Höhe des Dichtelements 148 aus dem Elastomermaterial möglichst groß ist, so dass das Dichtelement 148 dort eine möglichst große elastische Verformbarkeit aufweist und auch große dynamische Dickenschwankungen im Betrieb der elektrochemischen Vorrichtung 100 ausgleichen kann.

Statt an dem ersten Bauteil 188 kann das Dichtelement 148, zumindest abschnittsweise, auch an dem gegenüberliegenden zweiten Bauteil 190, insbesondere stoffschlüssig, festgelegt sein.

Wie aus den Fig. 6 und 7 zu ersehen ist, umfasst die Dichtungsanordnung 144 ferner einen Mediumkanal-Abschnitt 212, welcher an zwei Verzweigungsstellen 214 von dem Strömungsfeld-Abschnitt 198 der Dichtungsanordnung 144 abzweigt, den Mediumkanal 140 umgibt und den Mediumkanal 140 von einem äußeren Rand 216 der Bipolarplatte 130 trennt.

Wie am besten aus dem Schnitt der Fig. 7 durch einen Bereich des Mediumkanal-Abschnitts 212 und des Strömungsfeld-Abschnitts 198 zu ersehen ist, weist das Tragelement 146 der Dichtungsanordnung 144 in dem Mediumkanal-Abschnitt 212 eine geringere Höhe H_{M} auf als in dem Verbindungskanal-Bereich 206 des Strömungsfeld-Abschnitts 198 (H_{M} < H_{V}).

In zwischen dem Mediumkanal-Abschnitt 212 und dem Verbindungskanal-Bereich 206 des Strömungsfeld-Abschnitts 198 angeordneten Übergangsbereichen 218 der Dichtungsanordnung 144 nimmt die Höhe H_{U}' des Tragelements 146 von dem Wert H_{V} am Rande des Verbindungskanal-Bereichs 206, vorzugsweise kontinuierlich, insbesondere im Wesentlichen linear, längs der Längsrichtung 160 auf den Wert H_{M} am Rande des Mediumkanal-Abschnitts 212 ab.

Ferner ist aus Fig. 7 zu ersehen, dass die Höhe H des Tragelements 146 an einer ersten Sickenflanke 164 des Mediumkanal-Abschnitts 212 von dem Wert H_{M} bis auf die Materialstärke des Tragelements 146 abnimmt und dass die Höhe H des Tragelements 146 an einer zweiten Sickenflanke 170 des Verbindungskanal-Bereichs 206 von dem Wert H_{V} bis auf den Wert der Materialstärke des Tragelements 146 abnimmt.

Die Höhe h_{M} des Dichtelements 148 ist in dem Mediumkanal-Abschnitt 212 der Dichtungsanordnung 144 größer als in dem Verbindungskanal-Bereich 206 des Strömungsfeld-Abschnitts 198 (h_{M} > h_{V}).

In den Übergangsbereichen 218 nimmt die Höhe h_{U}' des Dichtelements 148, von dem Wert h_{M} am Rand des Mediumkanal-Abschnitts 212 ausgehend, vorzugsweise kontinuierlich, insbesondere im Wesentlichen linear, längs der Längsrichtung 160 bis auf den Wert h_{V} am Rande des Verbindungskanal-Bereichs 206 ab.

In den Übergangsbereichen 218 bildet das Tragelement 146 eine gegenüber der Bezugsebene 166 und gegenüber der Stapelrichtung 104 geneigte Rampe, welche das Dichtelement 148 trägt.

Da bei der in den Fig. 6 bis 8 dargestellten Ausführungsform des Ein- oder Ausströmbereichs an dem Mediumkanal 140 das zweite Bauteil 190, insbesondere das zweite Teil 152 der Bipolarplatte 130', eine im Wesentlichen ebene Unterseite aufweist, ist die Summe der Höhen H des Tragelements 146 und h des Dichtelements 148 im Mediumkanal-Abschnitt 212, in den Übergangsbereichen 218 und im Verbindungskanal-Bereich 206 des Strömungsfeld-Abschnitts 198 im montierten und/oder verspannten Zustand der Dichtungsanordnung 144 im Wesentlichen konstant (H_{M} + h_{M} = Hᵤ' + h_{U}' = H_{V} + h_{V}).

Hierdurch wird erreicht, dass das Tragelement 146 in dem Verbindungskanal-Bereich 206 eine ausreichende Höhe aufweist, um dort Durchtrittsöffnungen 202 und 204 für die Verbindungskanäle 200 mit ausreichendem Strömungsquerschnitt vorsehen zu können, während die Höhe des Dichtelements 148 in dem Mediumkanal-Abschnitt 212 möglichst hoch ist, um möglichst große dynamische Dickenschwankungen im Betrieb der elektrochemischen Vorrichtung 100 ausgleichen zu können.

## Patentansprüche

1. Dichtungsanordnung für eine elektrochemische Vorrichtung (100), umfassend ein Tragelement (146) und ein an dem Tragelement (146) angeordnetes Dichtelement (148), welches ein Elastomermaterial umfasst, wobei das Tragelement (146) und/oder das Dichtelement (148) eine in einer Längsrichtung (160) der Dichtungsanordnung (144) variierende Höhe (H; h) und/oder eine in einer Längsrichtung (160) der Dichtungsanordnung (144) variierende Breite (D; d) aufweisen und
wobei die elektrochemische Vorrichtung (100) mindestens einen Mediumkanal (140), der sich längs einer Stapelrichtung (104) durch mehrere längs der Stapelrichtung (104) aufeinanderfolgende elektrochemische Einheiten (106) der elektrochemische Vorrichtung (100) hindurch erstreckt,
ein Strömungsfeld (142), durch welches ein fluides Medium von dem Mediumkanal (140) quer zu der Stapelrichtung (104) zu einem anderen Mediumkanal (140b) strömen kann, und
mindestens einen Verbindungskanal (200), durch welchen das Strömungsfeld (142) und der Mediumkanal (140) in Fluidverbindung miteinander stehen, umfasst,
**dadurch gekennzeichnet,**
**dass** die Dichtungsanordnung (144) einen Strömungsfeld-Abschnitt (198) umfasst, welcher zwischen dem Mediumkanal (140) und dem Strömungsfeld (142) verläuft und den mindestens einen Verbindungskanal (200) quert.

2. Dichtungsanordnung nach Anspruch 1, **dadurch gekennzeichnet, dass** das Tragelement (146) plastisch verformbar ist.

3. Dichtungsanordnung nach einem der Ansprüche 1 oder 2, **dadurch gekennzeichnet, dass** das Tragelement (146) eine Sicke (158) umfasst.

4. Dichtungsanordnung nach einem der Ansprüche 1 bis 3, **dadurch gekennzeichnet, dass** das Tragelement (146) einen Bestandteil eines ersten Bauteils (188) der elektrochemischen Vorrichtung (100) bildet und dass das Dichtelement (148) im montierten Zustand der elektrochemischen Vorrichtung (100) zwischen dem ersten Bauteil (188) und einem zweiten Bauteil (190) der elektrochemischen Vorrichtung (100) angeordnet ist.

5. Dichtungsanordnung nach Anspruch 4, **dadurch gekennzeichnet, dass** das Dichtelement (148) an dem ersten Bauteil (188) und/oder an dem zweiten Bauteil (190) der elektrochemischen Vorrichtung (100) festgelegt ist.

6. Dichtungsanordnung nach einem der Ansprüche 4 oder 5, **dadurch gekennzeichnet, dass** das Dichtelement (148) zumindest teilweise an einem Bereich des Tragelements (146) angeordnet ist, welcher zu dem zweiten Bauteil (190) hin vorspringt.

7. Dichtungsanordnung nach einem der Ansprüche 4 bis 6, **dadurch gekennzeichnet, dass** das Dichtelement (148) zumindest teilweise an einem Bereich des Tragelements (146) angeordnet ist, welcher zu einer dem zweiten Bauteil (190) abgewandten Seite des ersten Bauteils (188) hin vorspringt.

8. Dichtungsanordnung nach einem der Ansprüche 4 bis 7, **dadurch gekennzeichnet, dass** das zweite Bauteil (190) einen zu dem Dichtelement (148) hin vorspringenden Vorsprung (192) aufweist.

9. Dichtungsanordnung nach einem der Ansprüche 1 bis 8, **dadurch gekennzeichnet, dass** die elektrochemischen Vorrichtung (100) einen Stapel (102) aus mehreren längs einer Stapelrichtung (104) aufeinanderfolgenden elektrochemischen Einheiten (106) und eine Spannvorrichtung (108) zum Beaufschlagen der elektrochemischen Einheiten (106) mit einer längs der Stapelrichtung (104) gerichteten Spannkraft umfasst.

10. Dichtungsanordnung nach Anspruch 9, **dadurch gekennzeichnet, dass** das Tragelement (146) und/oder das Dichtelement (148) in einem ersten Bereich (120) der elektrochemischen Vorrichtung (100), in welchem die Spannkraft größer ist als in einem zweiten Bereich (122) der elektrochemischen Vorrichtung (100), eine größere Breite (D; d) aufweist als in dem zweiten Bereich (122) der elektrochemischen Vorrichtung (100).

11. Dichtungsanordnung nach einem der Ansprüche 9 oder 10, **dadurch gekennzeichnet, dass** das Tragelement (146) und/oder das Dichtelement (148) in einem ersten Bereich (120) der elektrochemischen Vorrichtung (100), in welchem die Spannkraft größer ist als in einem zweiten Bereich (122) der elektrochemischen Vorrichtung (100), eine geringere Höhe (H; h) aufweist als in dem zweiten Bereich (122) der elektrochemischen Vorrichtung (100).

12. Dichtungsanordnung nach einem der Ansprüche 1 bis 11, **dadurch gekennzeichnet, dass** der Strömungsfeld-Abschnitt (198) einen Verbindungskanal-Bereich (206), in welchem der Strömungsfeld-Abschnitt (198) den mindestens einen Verbindungskanal (200) quert, und mindestens einen in der Längsrichtung (160) des Strömungsfeld-Abschnitts (198) vor oder hinter dem Verbindungskanal-Bereich (206) liegenden Nachbarbereich (208) umfasst, wobei das Dichtelement (148) im montierten Zustand der Dichtungsanordnung (144) in dem Verbindungskanal-Bereich (206) eine geringere Höhe (h) aufweist als in dem Nachbarbereich (208).

13. Dichtungsanordnung nach Anspruch 12, **dadurch gekennzeichnet, dass** die Dichtungsanordnung (144) einen Mediumkanal-Abschnitt (212) umfasst, welcher den Mediumkanal (140) zumindest teilweise umgibt, wobei das Dichtelement (148) im montierten Zustand der Dichtungsanordnung (144) in dem Mediumkanal-Abschnitt (212) eine größere Höhe (h) aufweist als in dem Verbindungskanal-Bereich (206) des Strömungsfeld-Abschnitts (198).

14. Dichtungsanordnung nach einem der Ansprüche 1 bis 13, **dadurch gekennzeichnet, dass** das Tragelement (146) der Dichtungsanordnung (144) mindestens eine Durchtrittsöffnung (202; 204) aufweist, durch welche sich ein Verbindungskanal (200) hindurch erstreckt.

## Claims

1. Seal arrangement for an electrochemical device (100), comprising a support element (146) and a sealing element (148), which is arranged on the support element (146) and comprises an elastomer material, wherein the support element (146) and/or the sealing element (148) have a height (H; h) that varies in a longitudinal direction (160) of the seal arrangement (144) and/or a width (D; d) that varies in a longitudinal direction (160) of the seal arrangement (144) and
wherein the electrochemical device (100) comprises at least one medium channel (140), which extends along a stacking direction (104) through a plurality of electrochemical units (106) of the electrochemical device (100) succeeding one another along the stacking direction (104),
a flow field (142), through which a fluid medium can flow from the medium channel (140) transversely to the stacking direction (104) to another medium channel (140b), and
at least one connecting channel (200), by means of which the flow field (142) and the medium channel (140) are in fluidic connection with one another,
**charaterized in that**
the seal arrangement (144) comprises a flow field portion (198), which extends between the medium channel (140) and the flow field (142) and crosses the at least one connecting channel (200).

2. Seal arrangement in accordance with Claim 1, **characterized in that** the support element (146) is plastically deformable.

3. Seal arrangement in accordance with either of Claims 1 or 2, **characterized in that** the support element (146) comprises a bead (158).

4. Seal arrangement in accordance with any one of Claims 1 to 3, **characterized in that** the support element (146) forms a constituent part of a first component (188) of the electrochemical device (100), and **in that** the sealing element (148), in the assembled state of the electrochemical device (100), is arranged between the first component (188) and a second component (190) of the electrochemical device (100).

5. Seal arrangement in accordance with Claim 4, **characterized in that** the sealing element (148) is fixed to the first component (188) and/or to the second component (190) of the electrochemical device (100).

6. Seal arrangement in accordance with either of Claims 4 or 5, **characterized in that** the sealing element (148) is arranged at least partially on a region of the support element (146) that projects toward the second component (190).

7. Seal arrangement in accordance with any one of Claims 4 to 6, **characterized in that** the sealing element (148) is arranged at least partially on a region of the sealing element (146) that projects toward a side of the first component (188) facing away from the second component (190).

8. Seal arrangement in accordance with any one of Claims 4 to 7, **characterized in that** the second component (190) comprises a projection (192) projecting toward the sealing element (148).

9. Seal arrangement in accordance with any one of Claims 1 to 8, **characterized in that** the electrochemical device (100) comprises a stack (102) of a plurality of electrochemical units (106) succeeding one another along a stacking direction (104) and a clamping device (108) for applying a clamping force directed along the stacking direction (104) to the electrochemical units (106).

10. Seal arrangement in accordance with Claim 9, **characterized in that** the support element (146) and/or the sealing element (148) has a greater width (D; d) in a first region (120) of the electrochemical device (100), in which the clamping force is greater than in a second region (122) of the electrochemical device (100), than in the second region (122) of the electrochemical device (100).

11. Seal arrangement in accordance with either of Claims 9 or 10, **characterized in that** the support element (146) and/or the sealing element (148) has a smaller height (H; h) in a first region (120) of the electrochemical device (100), in which the clamping force is greater than in a second region (122) of the electrochemical device (100), than in the second region (122) of the electrochemical device (100).

12. Seal arrangement in accordance with any one of Claims 1 to 11, **characterized in that** the flow field portion (198) comprises a connecting channel region (206), in which the flow field portion (198) crosses the at least one connecting channel (200), and at least one neighboring region (280) located in front of or behind the connecting channel region (206) in the longitudinal direction (160) of the flow field portion (198), wherein the sealing element (148), in the assembled state of the seal arrangement (144), has a smaller height (h) in the connecting channel region (206) than in the neighboring region (208).

13. Seal arrangement in accordance with Claim 12, **characterized in that** the seal arrangement (144) comprises a medium channel portion (212), which at least partially surrounds the medium channel (140), wherein the sealing element (148), in the assembled state of the seal arrangement (144), has a greater height (h) in the medium channel portion (212) than in the connecting channel region (206) of the flow field portion (198).

14. Seal arrangement in accordance with any one of Claims 1 to 13, **characterized in that** the support element (146) of the seal arrangement (144) has at least one through-opening (202; 204), through which a connecting channel (200) extends.

## Revendications

1. Ensemble d'étanchéité pour un dispositif (100) électrochimique, comprenant un élément de support (146) et, disposé sur l'élément de support (146), un élément étanche (148), lequel comprend un matériau en élastomère, dans lequel l'élément de support (146) et/ou l'élément étanche (148) présentent une hauteur (H ; h) variant dans un sens longitudinal (160) de l'ensemble d'étanchéité (144) et/ou une largeur (D ; d) variant dans un sens longitudinal (160) de l'ensemble d'étanchéité (144), et
dans lequel le dispositif (100) électrochimique comprend au moins un canal de milieu (140) qui s'étend le long d'un sens d'empilement (104) à travers plusieurs unités (106) électrochimiques se suivant les unes les autres le long du sens d'empilement (104) du dispositif (100) électrochimique,
un champ d'écoulement (142), par lequel un milieu fluide peut s'écouler depuis le canal de milieu (140) de manière transversale par rapport au sens d'empilement (104) vers un autre canal de milieu (140b), et
au moins un canal de liaison (200), par lequel le champ d'écoulement (142) et le canal de milieu (140) sont en communication fluidique l'un avec l'autre,
**caractérisé en ce**
**que** l'ensemble d'étanchéité (144) comprend une section de champ d'écoulement (198), laquelle s'étend entre le canal de milieu (140) et le champ d'écoulement (142) et traverse l'au moins un canal de liaison (200).

2. Ensemble d'étanchéité selon la revendication 1, **caractérisé en ce que** l'élément de support (146) est déformable plastiquement.

3. Ensemble d'étanchéité selon l'une quelconque des revendications 1 ou 2, **caractérisé en ce que** l'élément de support (146) comprend une nervure (158).

4. Ensemble d'étanchéité selon l'une quelconque des revendications 1 à 3, **caractérisé en ce que** l'élément de support (146) constitue un élément constitutif d'un premier composant (188) du dispositif (100) électrochimique, et que l'élément étanche (148) est disposé dans l'état monté du dispositif (100) électrochimique entre le premier composant (188) et un deuxième composant (190) du dispositif (100) électrochimique.

5. Ensemble d'étanchéité selon la revendication 4, **caractérisé en ce que** l'élément étanche (148) est fixé sur le premier composant (188) et/ou sur le deuxième composant (190) du dispositif (100) électrochimique.

6. Ensemble d'étanchéité selon l'une quelconque des revendications 4 ou 5, **caractérisé en ce que** l'élément étanche (148) est disposé au moins en partie sur une zone de l'élément de support (146), lequel fait saillie en direction du deuxième composant (190).

7. Ensemble d'étanchéité selon l'une quelconque des revendications 4 à 6, **caractérisé en ce que** l'élément étanche (148) est disposé au moins en partie sur une zone de l'élément de support (146), laquelle fait saillie en direction d'un côté du premier composant (188) opposé au deuxième composant (190).

8. Ensemble d'étanchéité selon l'une quelconque des revendications 4 à 7, **caractérisé en ce que** le deuxième composant (190) présente une saillie (192) faisant saillie en direction de l'élément étanche (148).

9. Ensemble d'étanchéité selon l'une quelconque des revendications 1 à 8, **caractérisé en ce que** le dispositif (100) électrochimique comprend une pile (102) composée de plusieurs unités (106) électrochimiques se suivant les unes les autres le long d'un sens d'empilement (104) et un dispositif de serrage (108) pour soumettre les unités (106) électrochimiques à l'action d'une force de serrage dirigée le long du sens d'empilement (104).

10. Ensemble d'étanchéité selon la revendication 9, **caractérisé en ce que** l'élément de support (146) et/ou l'élément étanche (148) présentent dans une première zone (120) du dispositif (100) électrochimique, dans laquelle la force de serrage est plus importante que dans une deuxième zone (122) du dispositif (100) électrochimique, une largeur (D ; d) plus grande que dans la deuxième zone (122) du dispositif (100) électrochimique.

11. Ensemble d'étanchéité selon l'une quelconque des revendications 9 ou 10, **caractérisé en ce que** l'élément de support (146) et/ou l'élément étanche (148) présentent dans une première zone (120) du dispositif (100) électrochimique, dans laquelle la force de serrage est plus grande que dans une deuxième zone (122) du dispositif (100) électrochimique, une hauteur (H ; h) plus petite que dans la deuxième zone (122) du dispositif (100) électrochimique.

12. Ensemble d'étanchéité selon l'une quelconque des revendications 1 à 11, **caractérisé en ce que** la section de champ d'écoulement (198) comprend une zone de canal de liaison (206), dans laquelle la section de champ d'écoulement (198) traverse l'au moins un canal de liaison (200), et au moins une zone voisine (208) située devant ou après la zone de canal de liaison (206) dans le sens longitudinal (160) de la section de champ d'écoulement (198), dans lequel l'élément étanche (148) présente dans l'état monté de l'ensemble d'étanchéité (144) dans la zone de canal de liaison (206) une hauteur (h) plus petite que dans la zone voisine (208).

13. Ensemble d'étanchéité selon la revendication 12, **caractérisé en ce que** l'ensemble d'étanchéité (144) comprend une section de canal de milieu (212), laquelle entoure au moins en partie le canal de milieu (140), dans lequel l'élément étanche (148) présente dans l'état monté de l'ensemble d'étanchéité (144) dans la section de canal de milieu (212) une hauteur (h) plus grande que dans la zone de canal de liaison (206) de la section de champ d'écoulement (198).

14. Ensemble d'étanchéité selon l'une quelconque des revendications 1 à 13, **caractérisé en ce que** l'élément de support (146) de l'ensemble d'étanchéité (144) présente au moins une ouverture de passage (202 ; 204), à travers laquelle s'étend un canal de liaison (200) .
